# EUROPEAN PATENT SPECIFICATION

(11) **EP 1 135 046 B1**
(45) Date of publication and mention of the grant of the patent: **30.07.2003**
(21) Application number: 99972899.1
(22) Date of filing: 30.11.1999
(51) Int. Cl.: A47J 37/08

(54) **IMPROVEMENTS IN OR RELATING TO DOMESTIC TOASTERS**
VERBESSERUNGEN AN HAUSHALTS-TOASTGERÄTEN
AMELIORATIONS APPORTEES A DES GRILLE-PAIN DOMESTIQUES

(30) Priority: 03.12.1998 GB 9826456
(43) Date of publication of application: 26.09.2001
(73) Proprietor: Kenwood Marks Limited, Havant, Hampshire PO9 2NH (GB)
(72) Inventor: Nicholson, Martin, Waterlooville, Hants PO7 7RS (GB)
(74) Representative: Leaman, Keith
(86) International application number: GB9904001
(87) International publication number: WO00032079

(56) References cited:
- DE-A- 3 048 173
- DE-U- 7 719 579
- DE-U- 9 216 648
- DE-U- 29 719 148

## Description

This invention relates to domestic toasters as defined in the preamble of claim 1, see DE-U-297 19 148.

Domestic toasters generally consist of a casing, which may be of metallic or plastics construction, housing one or more pairs of electrically powered heating elements; the respective elements of a pair each being configured and disposed so as to direct heat towards one of the sides of one or more slices of bread.

Usually, the bread is held vertical whilst being heated, and thus the casing is provided with a vertical slot, or plural slots, into which the bread is placed for toasting. The lower edge of the slice of bread rests on a spring-loaded carriage which is automatically released when a chosen toasting cycle is completed, so as to urge the bread upwardly to rest with its upper edge clear of the top surface of the toaster.

User-operable controls are provided for selecting different operating times, to achieve different degrees of toasting, according to choice, and typically also for providing an extended toasting period for frozen bread (sometimes called a "defrost" setting), a reheating facility and for cancelling the operation of an incorrectly set or unwanted function. Frequently there is also provided a mechanical facility for raising the toast carriage above the height at which it normally rests when released as described above, to facilitate withdrawal of toasted bread of less than normal size.

Another facility which has become popular is the provision of a so-called bun rack, which comprises a device intended to sit atop the toaster, to hold buns or the like above the slot or slots in the toaster casing, where they can be heated by the toaster's heating elements. The device in question usually comprises a platform constructed from a series of rods or bars which may be stored separately from the toaster and placed upon it when required for use, or which preferably is integral with the toaster, in the sense that the platform comprises an open grid arrangement, configured into a form that does not interfere with the normal operation of the toaster, which is movably attached to the toaster and can be moved when desired into an operative position by means of a suitable mechanism.

It is an object of this invention to provide a toaster having an integral bun rack (in the sense outlined above) comprising a platform that is capable of being readily raised, in a convenient and user-friendly manner, to an operative position, where it is disposed above and spaced from the toaster's bread slot (or slots).

According to the invention there is provided a toaster comprising a casing having at least one substantially vertical slot in a top surface thereof to receive one or more slices of bread, a platform with apertures therein, a mobile support for said platform capable of moving between first and second positions relative to said casing, causing said platform to assume respectively a rest position, in which said platform is disposed on or adjacent said top surface with said at least one aperture in substantial alignment with said at least one slot, and an operative position, in which said platform is disposed above and spaced from said top surface, resilient means biassing said mobile support towards said second position and a manually releasable detent means latching said mobile support in said first position.

By this means, the platform can be moved to its operative position merely by the user actuating the detent means, providing in effect a so-called "pop-up" facility that is comparable with the electrically-operated "pop-up" action of the toaster when the toast is done.

Preferably, the mobile support co-operates with guide means supported by or forming part of the casing to effect a linear vertical movement between said first and second positions. This promotes smooth and controlled motion of the support and the platform relative to the toaster casing.

Preferably also, the mobile support incorporates one or more vertically disposed rod members and the guide means comprises a bush member having an aperture therethrough for the or each rod member, such that the movement of the or each rod member relative to its aperture guides the vertical motion of the mobile support.

It is preferred too that the vertical movement of the mobile member between its first and second positions is damped to prevent the generation of shock or vibration when the platform is raised to its operative position. This can conveniently be achieved by causing a rod member of the mobile support to move through a rubber bushing of sufficient tightness of fit to effect a desired degree of damping.

Preferably the platform is cantilevered from the mobile support; providing a convenient and cost-effective mounting arrangement for the platform. In one preferred arrangement, the support is disposed to one of the longer sides of the toaster, thus minimising the cantilevered length of the platform. In an alternative preferred arrangement, the support is disposed to one of the shorter sides of the toaster, thereby enabling the support and its associated components to be mounted in an area of the toaster that is relatively uncluttered and away from the toaster's heating elements.

In order that the invention may be clearly understood and readily carried into effect, one embodiment thereof will now be described, by way of example only, with reference to the accompanying drawings, of which:
Figure 1 shows in perspective view a toaster, in accordance with one example of the invention, with a bun rack platform in a rest position, and with part of its casing cut away to illustrate an operating mechanism for the platform,
Figure 2 shows, in similar view to Figure 1, the toaster with the platform raised into its operative position,
Figure 3 shows, schematically and from the side, a toaster, in accordance with a second example of the invention, with its bun rack platform in the rest position; and
Figure 4 shows, in similar view to Figure 3, the toaster of Figure 3 with its bun rack raised to its operative position.

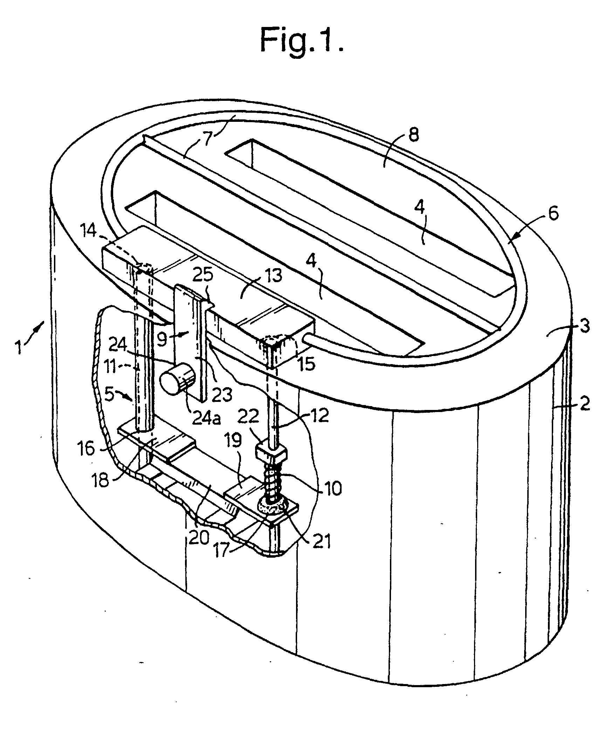

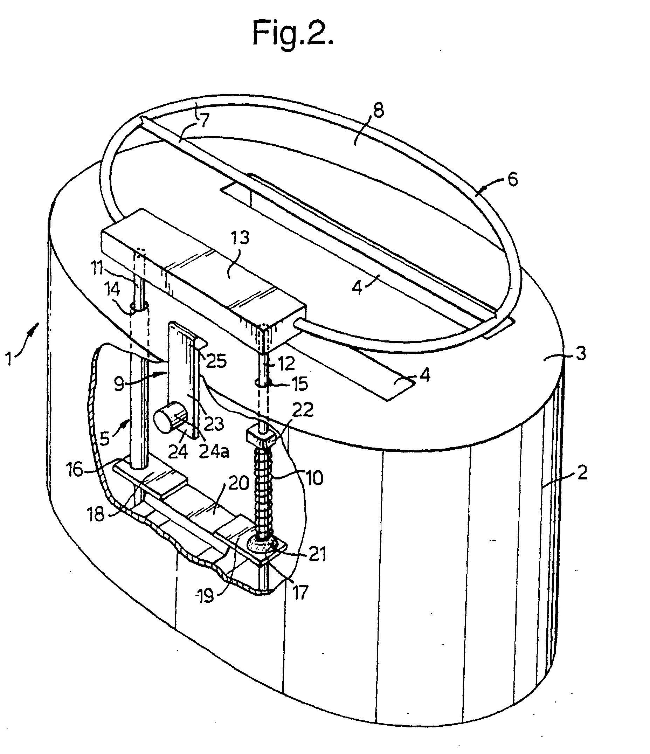

Referring now to Figures 1 and 2 of the drawings, a toaster 1 has a casing 2 formed of plastics material and preferably constructed in well known manner to operate with cool walls. The casing 2 has a top surface, constituted in this example by a metallic top plate 3 formed with two parallel slots-4 therein; each slot (as is conventional) being flanked by a pair of substantially planar heating elements (not shown) disposed vertically, and housing a vertically moveable bread carriage (not shown). The bread carriages rest normally in a raised position relative to the casing, but are pressed downwardly by user operation of a suitable lever or other device against spring pressure and releasably latched down when the toaster is connected to an electricity supply. The action of latching the carriage down enables power to be supplied to the heating elements.

When the desired toasting cycle, the length of which is determined by the user and is governed by the extent to which the user desires to toast the bread, is complete, the carriage latch is automatically released, and returns to its normal rest position under the influence of the aforementioned spring pressure, thus causing the toast to "pop up" and permitting its ready withdrawal through the relevant slot. The release of the carriage disconnects the supply of electricity from the heating elements in known manner. Safety cut-off provisions may be made, as is known, to guard against the possibility that the carriage may fail to release correctly at the conclusion of the set operating cycle, and thus (undesirably) continue to heat the bread.

Overlying the top surface 3, and mounted to the casing 2 of the toaster 1 by means of a vertically mobile support 5 from which it is cantilevered, is a platform 6 configured to form a bun-warming rack. The platform 6 comprises an arrangement of metal rods 7 on which buns and the like can be placed for warming. The shape and configuration of the platform is, of course, designed to be compatible with (and possibly also to accentuate) the shape and configuration of the top surface 3 of the toaster but in any event, in order to avoid interfering with the normal operation of the toaster, the platform 6 is formed so as to create apertures such as 8 that encompass the slots 4.
Platform 6 is normally retained in a rest, or unused, position as shown in Figure 1, in which it is disposed in close juxtaposition with the top surface 3 of the toaster. It is retained in this position by means of a manually releasable latch 9 that co-operates with the mobile support 5 to hold the latter in a first, lower, position. The mobile support 5 is resiliently urged towards a second (upper) position by means of a spring 10, the arrangement being such that, when a user wishes to use the bun rack, the latch 9 is released, permitting the mobile support to move rapidly, in "pop-up" fashion, to its upper position. This moves the platform 6 to its operative position, shown in Figure 2, still overlying but now spaced from the top surface 3 of the toaster.

In this example, the mobile support 5 comprises a pair of vertically disposed rods 11 and 12 linked at their upper ends by a plastics block 13, which also serves as the cantilever mounting for the platform 6. The rods pass through four stationary guide apertures, two of these, 14 and 15, being provided in the top surface 3 of the toaster, and the other two, 16 and 17, being provided in respective horizontally disposed flanges 18 and 19 of a static support frame 20 which is attached to, or integrally formed with, the casing 2.

The spring 10, which provides the resilient urge tending to move the mobile support upwards at all times, is disposed around the rod 12 and a particularly cost effective means of damping the upward vertical movement of the mobile support 5 (and thus of the platform 6) is constituted by a rubber grommet 21 disposed in the aperture 17 in flange 19. The grommet 21 not only forms a vibration-free lower seating for the spring 10, but also is dimensioned to impart a chosen degree of interference to the motion of the rod 12 therethrough, thus limiting the speed with which the mobile support and the platform can move upwards, when the latch 9 is released, and also reducing the shock and vibration that could occur on the arrest of their motion if these components were allowed to move upwardly with excessive vertical speed. In this connection, it will be appreciated that it is desirable for the spring 10 to be relatively strong, to ensure reliable operation over the lifetime of the toaster 1, and thus it is preferable to use damping techniques to reduce the shock and vibrational effects associated with the rapid movement that such springs can cause, rather than using springs of marginal strength that could fail in service. In an alternative arrangement, springs such as 10 may be provided on both rods 11 and 12, in which case one or both rods may be provided with damping means. Damping means may alternatively or additionally be provided at or adjacent the apertures 14 and 15 in the top surface 3 of the toaster. As a further alternative, the resilient force urging the components 5 and 6 upwards may be provided or assisted by a suitably mounted leaf spring or an equivalent device.

A collar 22 is fixed to the rod 12 and provides an end stop for the vertical movement of the mobile support 5 relative to the casing 2. If desired, this collar 22 may be formed with, or support, a resilient buffer member (not shown) to complement or replace the action of the grommet 21.

In this example, the latch 9 is formed in a plastics member 23 that co-operates with the upper lip of the block 13 to hold the mobile support 5 in its lower position, against the force exerted by spring 10, until it is manually released by pressing inwards its lower end 24, moving its upper end 25 away from the block 13 by pivotal motion. The inward pressure on the lower end 24 of latch 9, necessary to release the latch, may be applied by way of a spring-loaded button 24a suitably mounted and retained (in known manner) in, and accessible through, an aperture formed through the casing 2.

When the user wishes to restore the platform 6 to its rest position, it is merely necessary to press down on the block 13 until the latch in plastics member 23 snaps into position over the top edge of the block 13.

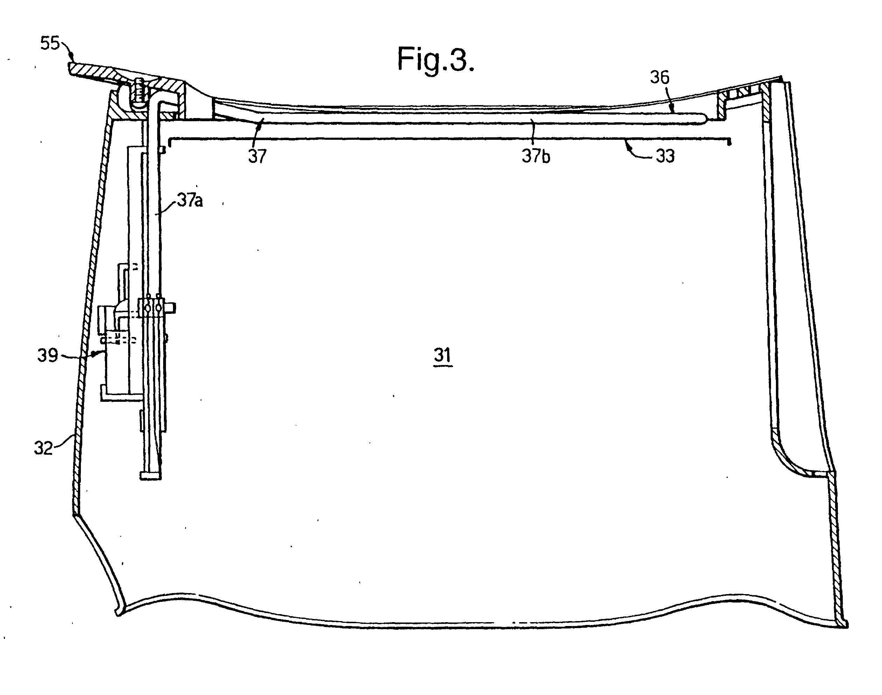

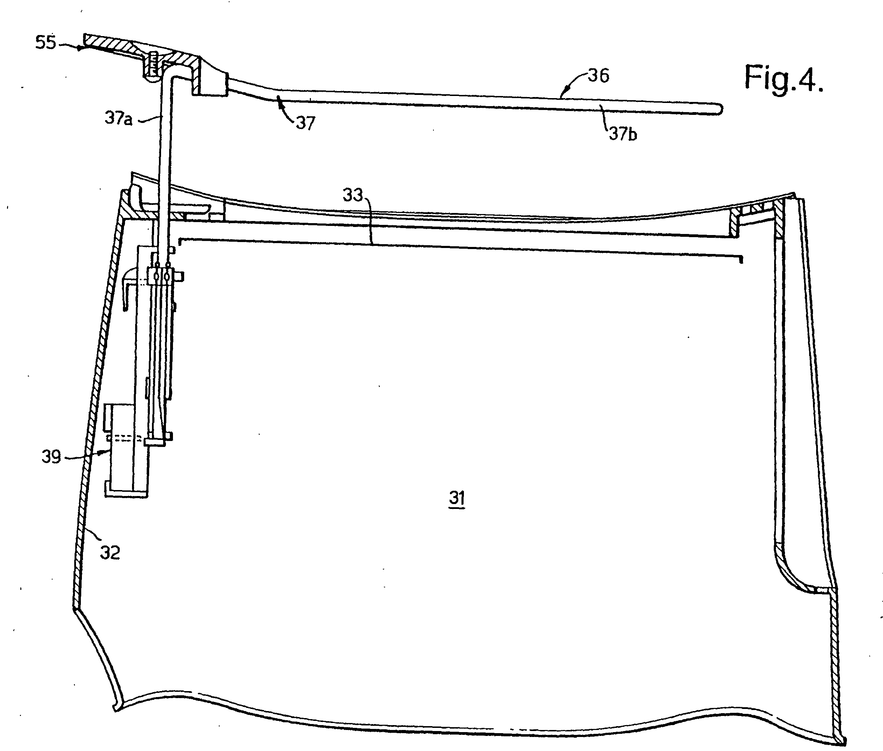

Referring now to Figures 3 and 4, the components relating to the bun rack and the pop-up nature of its operation are similar in many ways to those described in relation to Figures 1 and 2, and thus features common to both embodiments will not be described again at this point; emphasis being placed upon features that differ from those described already.

As will be recognised, the embodiment of Figures 3 and 4 differs principally from that of Figures 1 and 2 in relation to the placement, relative to the toaster itself, of the mobile support for the bun rack and in the nature of the latching and delatching technique employed. Moreover, the bun rack itself is not cantilevered from a plastics block, but comprises a bent wire configuration which supports a thermally insulated handle at an "elbow" of the wire.

Referring now in more detail to Figures 3 and 4, a bun rack 36 overlies a top plate 33 of a toaster 31 having an outer casing 32. The bun rack is made of suitably shaped and formed wire rods 37 and, in the rest position shown in Figure 3 is closely juxtaposed with the top plate 33; being held in that position by means of a latch 39 connected to vertically extending portions 37a of the wire rods 37. The latch 39 is of a commercially available kind and embodies a mechanism that alternately locks and unlocks in response to the application of downward pressure, applied by way of a thermally insulated handle 55, secured by screws to the rods 37 of the bun rack 36, in the vicinity of the "elbow" formed between the vertically extending portions 37a of the rods 37 and those portions 37b which are disposed horizontally and above the top plate 33.

In the operative position of the bun rack 36, shown in Figure 4, the rack is shown as being raised significantly above the top plate 33 of the toaster. This is achieved simply by the user pressing down on the handle 55 with sufficient force to unlock the latch 39, in response to which, when the user releases the force, the bun rack 36 pops up to the raised position shown in Figure 4 under the influence of a tension spring (not shown). The tension spring performs a similar function to the spring 10 described with respect to Figures 1 and 2. However, in the Figure 3 and 4 embodiment, the spring is mounted between a point fixed in relation to the top plate and a point at the base of the mobile support comprising the wire rod portions 37a and a mobile part of the latch 39. Thus, when the bun rack is latched in its rest (lower) position as shown in Figure 3, the tension spring is stretched, applying upwards force to the bun rack which is restrained by the latch 39 in its locked mode. When the latch 39 is unlocked, however, by user-application of downward pressure to the handle 55, the restraint on the force of the tension spring is released and when the user ceases to apply downward pressure to the handle 55, the tension spring contracts rapidly, causing the bun rack 36 to rapidly pop up to its operative (raised) position as shown in Figure 4.

When the user has finished with the bun rack and wishes to restore it to the rest position shown in Figure 3, it is merely necessary to press down on the handle 55, against the pressure exerted by the tension spring, until the latch 39 locks. This condition can be heard and felt.

Clearly, more than one spring can be used if desired, or leaf springs or other resilient members used instead of a coiled spring, or coiled springs, if it is preferred or more convenient to do so.

The detailed nature of the latch member will of course be determined by the shape and configuration, and the overall design and various operational characteristics of the toaster, as well as logistics and mechanical and human interface choices and general ergonomic considerations and requirements, and thus it is to be expected that widely differing arrangements will be employed in this respect.

Although particular embodiments of the invention have been described herein by way of example, the scope of the invention is not intended to be limited thereto, and is intended to encompass alternative and/or modified constructions as possible within the scope of the appended claims.

A further optional arrangement is to provide that, once the bun rack has been used, the toaster cannot be used for normal operation until a certain time has elapsed, and/or the resetting mechanism will not operate for a certain time in order to avoid the possibility that a user's fingers may be burned by an attempt to manually reset the bun rack incorrectly by pressing on the metallic rods of the platform too soon after use. Design and layout of components intended to discourage this practice may also be employed.

## Claims

1. A toaster (1) comprising a casing (2) having at least one substantially vertical slot (4) in a top surface (3) thereof to receive one or more slices of bread, a platform (6) with apertures (8) therein, a mobile support (5) for said platform capable of moving between first and second positions relative to said casing, causing said platform (6) to assume respectively a rest position, in which said platform is disposed on or adjacent said top surface with said at least one aperture (8) in substantial alignment with said at least one slot (4), and an operative position, in which said platform (6) is disposed above and spaced from said top surface (3), **characterised by** resilient means (10) biassing said mobile support (5) towards said second position and a manually releasable detent means (9) latching said mobile support (5) in said first position.

2. A toaster according to claim 1 wherein actuation of the detent means (9) by a user to release the latching of said mobile support (5) causes the platform to execute a "pop-up" motion.

3. A toaster according to either of claims 1 and 2 wherein the mobile support (5) co-operates with guide means (14-17) supported by or forming part of the casing to effect a linear vertical movement between said first and second positions.

4. A toaster according to claim 3 wherein the mobile support (5) incorporates one or more vertically disposed rod members (11, 12) and the guide means comprises a bush member having an aperture therethrough for the or each rod member, such that the movement of the or each rod member relative to its aperture guides the vertical motion of the mobile support.

5. A toaster according to any preceding claim wherein the movement of the mobile member between its first and second positions is damped to prevent the generation of shock or vibration when the platform is raised to its operative position.

6. A toaster according to claim 5 wherein a rod member of the mobile support is caused to move through a rubber bushing of sufficient tightness of fit to effect a desired degree of damping.

7. A toaster according to any preceding claim wherein the platform is cantilevered from the mobile support.

8. A toaster according to claim 7 wherein the mobile support is disposed to one of the longer sides of the toaster.

9. A toaster according to any of claims 1 to 6 wherein the mobile support is disposed to one of the shorter sides of the toaster.

10. A toaster according to any preceding claim wherein said mobile support includes elements of a latching mechanism configured to alternately lock and unlock in response to the application of downward pressure to said platform.

11. A toaster according to claim 10 wherein said platform supports a handle member of thermally insulative material to which said downward pressure is intended to be manually applied.

12. A toaster according to claim 10 or claim 11 wherein said resilient means comprises at least one tension spring mounted so as to be extended when the latching means locks said platform in its rest position and to contract when the latching means is unlocked to cause said platform to rapidly assume its operative position.

## Patentansprüche

1. Toaster (1), umfassend ein Gehäuse (2) mit wenigstens einem im wesentlichen vertikalen Schlitz (4) in einer oben liegenden Fläche (3) desselben zur Aufnahme einer oder mehrerer Brot-Scheiben, eine Plattform (6) mit Öffnungen (8) darin, eine bewegliche Halteeinrichtung (5) für die Plattform, die zwischen einer ersten und einer zweiten Position in bezug auf das Gehäuse bewegt werden kann, wodurch die Plattform (6) eine Ruheposition, in der die Plattform an oder nahe der oben liegenden Fläche mit der wenigstens einen Öffnung (8) im wesentlichen in Ausrichtung mit dem wenigstens einen Schlitz (4) angeordnet ist, und eine Arbeitsposition, in welcher die Plattform (6) oberhalb der oben liegenden Fläche (3) und von dieser entfernt angeordnet ist, einnimmt, **gekennzeichnet durch** nachgiebige Mittel (10), die die bewegliche Halteeinrichtung (5) in Richtung zur zweiten Position hin vorspannen, und ein manuell lösbares Rückhaltemittel (9), welches die bewegliche Halteeinrichtung (5) in der ersten Position verriegelt hält.

2. Toaster nach Anspruch 1, wobei die Betätigung des Rückhaltemittels (9) durch einen Benutzer zum Freigeben der Verriegelung der beweglichen Halteeinrichtung (5) dazu führt, dass die Plattform "hervorspringt".

3. Toaster nach Anspruch 1 oder Anspruch 2, wobei die bewegliche Halteeinrichtung (5) so mit am Gehäuse angebrachten oder einen Teil desselben bildenden Führungsmitteln (14 - 17) zusammenwirkt, dass zwischen der ersten und der zweiten Position eine lineare vertikale Bewegung ausgeführt wird.

4. Toaster nach Anspruch 3, wobei die bewegliche Halteeinrichtung (5) ein oder mehrere vertikal angeordnete Stangenmittel (11, 12) beinhaltet und die Führungsmittel ein Hülsen-Teil mit einer Öffnung für das oder jedes der Stangenmittel darin umfassen, derart, dass die Bewegung des oder jedes der Stangemittel relativ zu seiner Öffnung die vertikale Bewegung der beweglichen Halteeinrichtung führt.

5. Toaster nach einem der vorstehenden Ansprüche, wobei ein Stangenmittel zwischen seiner ersten und seiner zweiten Position gedämpft ist, um das Entstehen von Schockwellen oder Vibrationen beim Anheben der Plattform in ihre Arbeitsposition zu vermeiden.

6. Toaster nach Anspruch 5, wobei ein Stangenmittel der beweglichen Halteeinrichtung durch eine Gummitülle hindurch bewegt wird, die von ausreichender Dichte ist, um einen gewünschten Dämpfungsgrad zu erreichen.

7. Toaster nach einem der vorstehenden Ansprüche, wobei die Plattform freitragend an der beweglichen Halteeinrichtung angebracht ist.

8. Toaster nach Anspruch 7, wobei die bewegliche Halteeinrichtung an einer der längeren Seiten des Toasters angebracht ist.

9. Toaster nach einem der Ansprüche 1 bis 6, wobei die bewegliche Halteeinrichtung an einer der kürzeren Seiten des Toasters angebracht ist.

10. Toaster nach einem der vorstehenden Ansprüche, wobei die bewegliche Halteeinrichtung Elemente eines Verriegelungsmechnismus enthält, der so konfiguriert ist, dass er als Folge der Anwendung eines nach unten gerichtenen Drucks auf die Plattform alternierend ver- und entriegelt.

11. Toaster nach Anspruch 10, wobei die Plattform einen Griff aus thermisch isolierendem Material trägt, auf welchen der nach unten gerichtete Druck auf die Plattform anzuwenden ist.

12. Toaster nach Anspruch 10 oder Anspruch 11, wobei die nacgiebigen Mittel wenigstens eine Feder umfassen, die so angebracht ist, dass sie sich ausdehnt, wenn das Verriegelungsmittel die Plattform in ihrer Ruheposition verriegelt, und sich kontahiert, wenn das Verriegelungsmittel entriegelt wird, um die Plattform rasch in ihre Arbeitsposition zu bringen.

## Revendications

1. Grille-pain (1) comprenant un logement (2) possédant au moins une fente sensiblement verticale (4) dans une surface supérieure (3) de celui-ci pour recevoir une ou plusieurs tranches de pain, une plateforme (6) avec des ouvertures (8) dans celle-ci, un support mobile (5) pour que la plateforme puisse se déplacer entre une première et seconde position par rapport audit logement, entraînant ladite plateforme (6) de façon à ce qu'elle prenne respectivement une position de repos dans laquelle ladite plateforme est agencée sur ou adjacente à ladite au moins une fente (4) et une position fonctionnelle dans laquelle ladite plateforme (6) est agencée au-dessus et espacée de ladite surface supérieure (3), **caractérisé en ce que** des moyens souples (10) dévient ledit support mobile (5) vers ladite seconde position et **en ce qu'**un moyen de détente pouvant être libéré de façon manuelle (9) verrouille ledit support mobile (5) dans ladite première position.

2. Grille-pain selon la revendication 1, dans lequel l'actionnement du moyen de détente (9) par un utilisateur pour libérer le verrouillage dudit support mobile (5) entraîne la plateforme à effectuer un mouvement d'éjection.

3. Grille-pain selon l'une quelconque des revendications 1 et 2, dans lequel le support mobile (5) coopère avec des moyens de guidage (14-18) supportés par, ou formant une partie du logement pour effectuer un mouvement linéaire vertical entre lesdites première et seconde positions.

4. Grille-pain selon la revendication 3, dans lequel le support mobile (5) incorpore un ou plusieurs éléments de tige agencés de manière verticale (11,12) et dans lequel les moyens de guidage comprennent un élément de bague ayant une ouverture à travers celui-ci pour l'élément de tige ou chaque élément de tige de sorte que le mouvement de l'élément de tige ou de chaque élément de tige relatif à son ouverture guide le mouvement vertical du support mobile.

5. Grille-pain selon l'une quelconque des revendications précédentes, dans lequel le mouvement de l'élément mobile entre sa première et sa seconde position est amorti pour empêcher la génération de chocs ou de vibrations quand la plateforme est élevée dans sa position fonctionnelle.

6. Grille-pain selon la revendication 5, dans lequel un élément de tige du support mobile est entraîné pour se déplacer à travers une bague en caoutchouc d'une correspondance serrée suffisante pour effectuer un amortissement selon un degré souhaité.

7. Grille-pain selon l'une quelconque des revendications précédentes, dans lequel la plateforme est en porte à faux à partir du support mobile.

8. Grille-pain selon la revendication 7, dans lequel le support mobile est agencé sur un des côtés les plus longs du grille-pain.

9. Grille-pain selon l'une quelconque des revendications 1 à 6, dans lequel le support mobile est agencé sur un des côtés les plus courts du grille-pain.

10. Grille-pain selon l'une quelconque des revendications précédentes, dans lequel ledit support mobile comprend des éléments d'un mécanisme de verrouillage configuré pour alternativement verrouiller et déverrouiller en réponse à l'application d'une pression vers le bas sur ladite plateforme.

11. Grille-pain selon la revendication 10, dans lequel ladite plateforme supporte un élément de poignée d'un matériau isolateur thermique sur laquelle ladite pression vers le bas doit être appliquée de façon manuelle.

12. Grille-pain selon la revendication 10 ou la revendication 11, dans lequel ledit moyen souple comprend au moins un ressort de tension monté de façon à être étendu quand le moyen de verrouillage verrouille ladite plateforme dans sa position de repos et pour se contracter quand le moyen de verrouillage est déverrouillé pour entraîner la plateforme à prendre rapidement sa position fonctionnelle.
